Europäisches Patentamt

European Patent Office

Office européen des brevets

(11) Numéro de publication : **0 312 426 B1**

# (12) FASCICULE DE BREVET EUROPEEN

(45) Date de publication du fascicule du brevet :
**13.05.92 Bulletin 92/20**

(51) Int. Cl.$^5$ : **G21C 13/08, B23K 15/00**

(21) Numéro de dépôt : **88402497.7**

(22) Date de dépôt : **03.10.88**

(54) **Procédé de fabrication d'une cuve d'un réacteur nucléaire à eau légère et cuve de réacteur nucléaire fabriquée par ceprocédé.**

(30) Priorité : **16.10.87 FR 8714323**

(43) Date de publication de la demande :
**19.04.89 Bulletin 89/16**

(45) Mention de la délivrance du brevet :
**13.05.92 Bulletin 92/20**

(84) Etats contractants désignés :
**AT BE CH DE ES GB IT LI NL SE**

(56) Documents cités :
**DE-A- 2 537 115**
**FR-A- 2 390 236**

(56) Documents cités :
**TECHNICA, vol. 26, 1985, pages 105-109, Industrie Verlag, Zurich, CH; H. BEHNISCH: "Fortschritte beimElektronenstrahlschweissen"**
**NUCLEAR ENGINEERING, vol. 12, no. 133, juin 1967, pages 444-448, Londres, GB; L. PORSE: "Reactor pressure vessels,design-fabrication-testing"**

(73) Titulaire : **FRAMATOME**
**Tour Fiat 1, Place de la Coupole**
**F-92400 Courbevoie (FR)**

(72) Inventeur : **Vignes, Alain**
**4, place Violet**
**F-75015 Paris (FR)**

(74) Mandataire : **Bouget, Lucien et al**
**Cabinet Lavoix 2, Place d'Estienne d'Orves**
**F-75441 Paris Cédex 09 (FR)**

## Description

L'invention concerne un procédé de fabrication d'une cuve d'un réacteur nucléaire à eau légère comportant une enveloppe de forte épaisseur, par exemple supérieure à 100 mm. En particulier, l'invention concerne un procédé de fabrication d'une cuve de réacteur nucléaire à eau sous pression et une telle cuve d'une nouvelle conception.

Les cuves des réacteurs nucléaires à eau sous pression sont constituées par une enveloppe de forme générale cylindrique fermée à ses extrémités par des fonds bombés. La cuve qui renferme le coeur est exposée à un rayonnement neutronique intense et doit supporter la température et la pression du fluide primaire constitué par de l'eau à une température voisine de 320°C et à une pression de l'ordre de 150.10$^5$ Pa. Les cuves des réacteurs nucléaires à eau sous pression actuellement en service ont une épaisseur généralement comprise entre 200 et 300 mm et doivent être réalisées à partir de viroles cylindriques et d'un premier fond bombé, ces éléments étant assemblés par soudage. Le second fond bombé de la cuve constitue le couvercle qui est fixé par des goujons, au moment de la mise en, service de la cuve, sur une bride qui est rapportée par soudage sur l'une des viroles constitutives de la cuve.

Dans l'article de la revue " Nuclear Engineering" volume 12, n° 133 de Juin 1967, pages 444-448 ayant pour titre " Reactor pressure vessels, design-fabrication-testing" et pour auteur " L.PORSE", on a décrit un procédé de fabrication d'une cuve de réacteur nucléaire consistant à mettre en forme au moins deux pièces élémentaires de forme générale symétrique de révolution, puis à les assembler par soudage suivant toute leur épaisseur pour réaliser le composant.

L'assemblage de la cuve est généralement effectué par soudage sous flux avec métal d'apport, cette opération nécessitant un usinage approprié des extrémités des pièces à assembler, pour délimiter deux chanfreins de soudage qui sont ensuite remplis de métal d'apport.

La soudure ainsi obtenue doit ensuite être réusinée intérieurement et extérieurement et subir un traitement thermique.

Malgré toutes les précautions prises lors des opérations de soudage, le métal d'apport introduit une certaine discontinuité dans la structure métallurgique du métal de la cuve, ce qui peut être gênant, en particulier si un joint de soudure se trouve dans une zone de la cuve en vis-à-vis du coeur.

On a pu obtenir cependant une très bonne sécurité des cuves en prenant de très grandes précautions pendant les opérations de soudage et en effectuant des contrôles multiples.

L'assemblage d'une cuve de réacteur nucléaire est donc une opération très longue qui nécessite l'utilisation de moyens complexes et la présence d'un personnel hautement qualifié. L'exécution du remplissage des chanfreins de soudure nécessite de nombreuses passes de soudage et le métal déposé doit être surveillé afin d'éviter la présence de toute particule étrangère dans le joint soudé (inclusions de laitier...) .

On connait ces procédés d'assemblage par soudage sans métal d'apport qui permettent de réaliser un joint soudé en une seule passe et sur une épaisseur relativement importante.

En particulier, le soudage par faisceau d'électrons a déjà été utilisé pour assembler des pièces d'épaisseurs relativement fortes.

Par exemple, dans le DE-A-2 537 115, on a envisagé la possibilité de souder par faisceau d'électrons, des pièces en acier au chrome-molybdène. De tels aciers ne sont pas utilisés pour la fabrication de cuves de réacteurs nucléaires et la mise au point de nuances satisfaisantes pour cette application n'a pas été envisagée.

Des essais ont montré que les aciers utilisés actuellement pour la construction des cuves de réacteurs nucléaires à eau légère ne permettent pas le soudage de pièces d'une épaisseur supérieure à 100 mm, par faisceau d'électrons et en une seule passe, avec une qualité parfaite du joint soudé.

Le but de l'invention est donc de proposer un procédé de fabrication d'une cuve d'un réacteur nucléaire à eau légère comportant une enveloppe de forte épaisseur, symétrique de révolution, consistant à mettre en forme au moins deux pièces élémentaires en acier au chrome-molybdène, de forme générale symétrique de révolution et ayant une épaisseur supérieure à 100 mm, puis à les assembler par soudage par faisceau d'électrons suivant toute leur épaisseur pour réaliser la cuve, ce procédé permettant l'obtention de joints soudés de très bonne qualité et la fabrication de composants ayant une très bonne tenue à l'irradiation, avec un temps d'exécution beaucoup plus court que dans la technique antérieure.

Dans ce but, les pièces élémentaires sont réalisées en un acier ayant la composition suivante : C : 0,11 à 0,15 % ; Mn 0,30 à 0,60 % ; Si : 0,15 à 0,35 %; Cr : 2 à 2,5 % ; Mo : 0,9 à 1,1 % ; Ni : max 0,30 % ; P : max 0,005 % ; S : max 0,005 % ; Cu : max 0,05 % ; V : max 0,01 % ; Al : max 0,02 % ; Co : max 0,03 % ; Sb : max 0,001 % ; As : max 0,012 % et l'assemblage des pièces élémentaires est réalisé sans métal d'apport, en un seul passage, suivant toute l'épaisseur des pièces.

Afin de bien faire comprendre l'invention, on va maintenant décrire, à titre d'exemple non limitatif, en se référant aux figures jointes en annexe, le procédé de fabrication suivant l'invention appliqué à une cuve de réacteur nucléaire à eau sous pression d'un diamètre de l'ordre de 4,50 m et la cuve obtenue par le procédé suivant l'invention.

La figure 1 est une vue en coupe axiale d'une cuve d'un réacteur nucléaire à eau sous pression.

Les figures 2, 3 et 4 sont des vues éclatées montrant les différentes pièces élémentaires constituant une cuve et leur mode d'assemblage.

Les figures 5 et 6 sont des vues en élévation, suivant deux directions perpendiculaires, d'une installation pour le soudage d'une cuve de réacteur nucléaire par faisceau d'électrons.

La figure 7 est une vue en plan de l'installation représentée sur les figures 5 et 6.

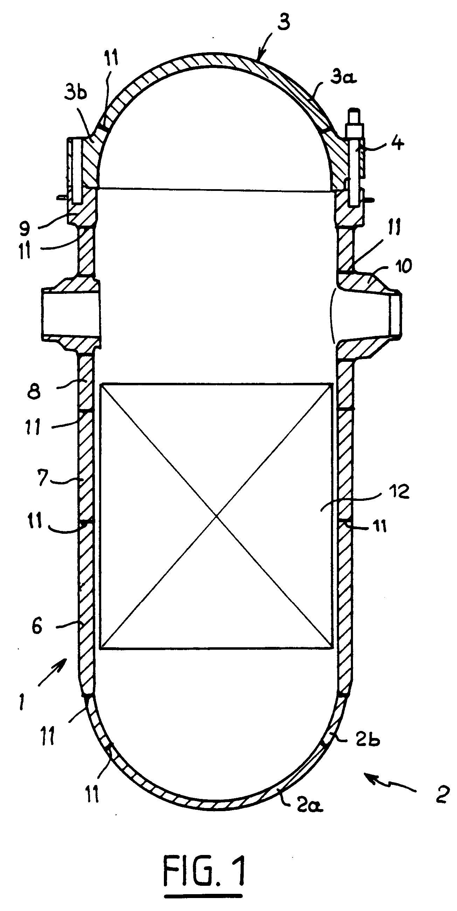

Sur la figure 1, on voit une cuve désignée de manière générale par le repère 1 comportant une partie centrale de forme cylindrique ainsi qu'un fond bombé 2 et un couvercle 3 de forme hémisphérique. Le couvercle 3 est fixé sur le corps de la cuve 1 par des goujons 4.

La partie cylindrique de la cuve est constituée par deux viroles de coeur 6 et 7, une virole porte-tubulures 8 et une bride 9. Les tubulures 10 permettent de relier la cuve aux tuyauteries du circuit primaire. Le fond 2 et le couvercle 3 sont constitués de deux parties 2a, 2b et 3a, 3b, respectivement.

Les pièces élémentaires 2a, 2b, 6, 7, 8, 9 et 10 constituant le corps de la cuve sont assemblées entre elles par soudure au niveau de joints 11. De même, les parties 3a et 3b du couvercle sont assemblées par soudure.

On a représenté la zone 12 dans laquelle sont disposés les assemblages combustibles constituant le coeur du réacteur, à l'intérieur de la cuve 1.

On voit que les joints de soudure 11 entre les deux viroles de coeur 6 et 7 d'une part et entre la virole de coeur supérieure 7 et la virole porte-tubulures 8 qui se trouvent au niveau du coeur sont les plus sollicités par l'irradiation.

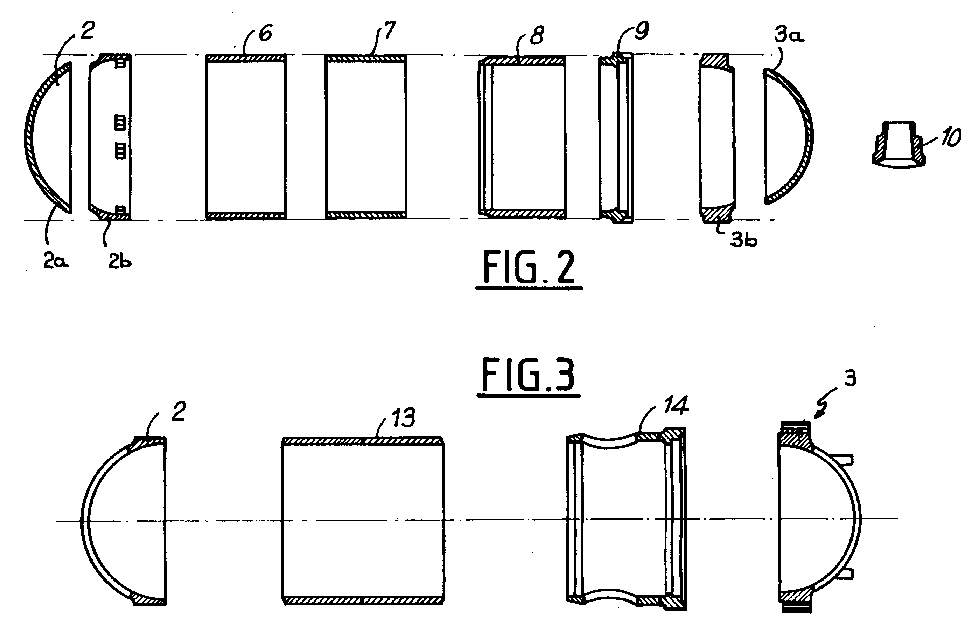

Sur la figure 2, on a représenté les différentes pièces élémentaires constituant la cuve du réacteur, avant leur assemblage. Ces pièces constituent pour la plupart des viroles ou des brides de forme annulaire, à l'exception des deux calottes sphériques d'extrémité 2a et 3a.

Ces pièces sont réalisées par forgeage d'un acier dont la composition est la suivante :
C : 0,22 % ; Mn : 1,15 à 1,60 % ; Si : 0,10 à 0,30 % ; Ni : 0,50 à 0,80 % ; Cr : 0,25 % ; Mo : 0,43 à 0,57 %.

Les différentes pièces à assembler sont ensuite usinées de façon à réaliser des rebords sur leurs extrémités venant en coïncidence. Lorsque les pièces sont placées en position d'assemblage, les rebords délimitent un ou deux chanfreins dans lesquels on dépose du métal d'apport par passes successives de soudage automatique à l'arc submergé.

On usine ensuite les rebords et une partie du métal d'apport puis on termine le joint soudé par dépôt de couches successives elles-mêmes constituées par des passes successives de soudage. Il est nécessaire d'effectuer de très nombreuses passes pour réaliser un joint soudé.

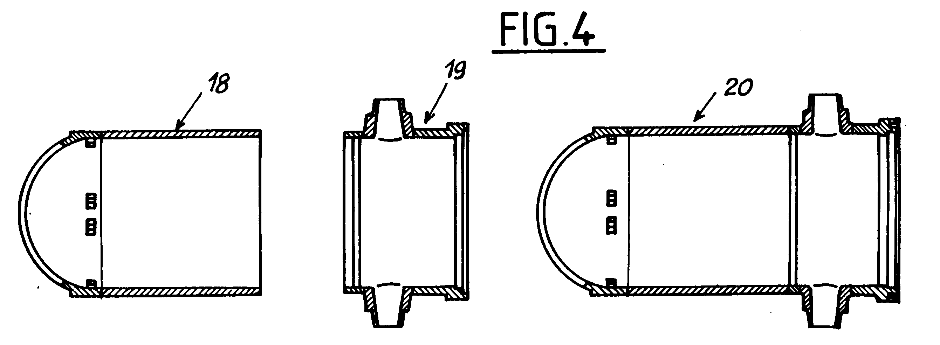

Comme il est visible sur la figure 3, dans un premier temps, les viroles de coeur 6 et 7 sont assemblées bout à bout sous la forme d'une virole 13. Le fond 2 est assemblé puis soudé sur l'ensemble réalisé. Ce premier ensemble 18 constitue le sous-ensemble inférieur de la cuve (figure 4). Le sous-ensemble supérieur 19 est constitué par la virole porte-tubulures 8 sur laquelle on a fixé les tubulures 10, assemblée à la bride 9. Les deux sous-ensembles 18, 19 sont ensuite soudés l'un à l'autre. L'ensemble de ces soudures est réalisé par soudage automatique à l'arc submergé.

Le couvercle 3 est lui-même réalisé par soudage à l'arc submergé des pièces 3a et 3b.

Les différentes pièces constituant la cuve ont des épaisseurs généralement comprises entre 200 et 300 mm.

Dans le cas d'une cuve fabriquée suivant le procédé de l'invention, les pièces forgées 2a, 2b, 6, 7, 8, 9, 10, 3a, 3b constituant la cuve sont réalisées en un acier renfermant principalement 2 à 2,50 % de chrome et 0,9 à 1,10 % de molybdène et dont la teneur en carbone est au plus égale à 0,15 %. De manière préférentielle, l'acier renferme 2,25 % de chrome et 1 % de molybdène.

De façon plus précise, les aciers utilisables pour la mise en oeuvre du procédé de fabrication selon l'invention ont une composition telle que définie ci-dessous :
C : 0,11 à 0,15 % ; Mn : 0,30 à 0,60 % ; Si : 0,15 à 0,35 % ; Cr : 2 à 2,50 % ; Mo : 0,9 à 1,1 % ; Ni : max 0,30 ; P : max 0,005 ; S : max 0,005 ; Cu : max 0,05 ; V : max 0,01 ; Al : max 0,02 ; Co : max 0,03 ; Sb : max 0,001 ; As : max 0,012.

Les caractéristiques mécaniques minimales obtenues pour ces aciers sont les suivantes :
à 20°C : Résistance mécanique 550 Mpa
Limite élastique 385 Mpa
Allongement A% 20 %
à 330°C : Limite élastique 310 MPa

Ces aciers qui sont utilisés de manière classique pour la fabrication de composants destinés à l'industrie pétrochimique se sont avérés soudables par faisceau d'électrons, jusqu'à des épaisseurs d'au moins 300 mm. Des soudures réalisées en une seule passe avec un canon de soudage par faisceau d'électrons d'une puissance de 200 KW ont montré des propriétés métallurgiques excellentes.

Les différentes viroles et calottes sphériques constituant la cuve selon l'invention ont une épaisseur comprise entre 200 et 300 mm.

Les pièces 2a, 2b, 6, 7, 8, 9, 10 et 3a, 3b sont élaborées et mises en forme par les procédés d'aciérie et de forgeage connus de l'art antérieur, pous la fabrication des pièces élémentaires de cuve.

L'assemblage de ces pièces élémentaires sera effectué comme dans la technique suivant l'art antérieur de façon à constituer le sous-ensemble inférieur 18 de la cuve par soudage du fond 2 pré-assemblé sur l'ensemble 13 et le sous-ensemble supérieur 19, par soudage des tubulures 10 sur la virole porte-tubulures 14 constituée par soudage de la bride 9 sur la virole 8.

L'assemblage final de la cuve 20 (figure 4) est assuré par soudage bout à bout du sous-ensemble inférieur 18 et du sous-ensemble supérieur 19.

Les différentes soudures sont effectuées en une seule passe, par faisceau d'électrons sur les extrémités mises en coïncidence des pièces à joindre.

Par rapport à la technique antérieure de soudage automatique à l'arc submergé, les quantités d'énergie thermique mises en jeu sont beaucoup plus faibles et se développent dans un volume réduit de matière à la jonction des deux pièces.

Il en résulte des modifications et une déformation d'origine thermique moindre des pièces constituant la cuve. Le soudage par faisceau d'électrons permet d'obtenir des joints sans métal d'apport dont la tenue à l'irradiation est identique à celle du métal de base.

De plus, le fait que le soudage par faisceau d'électrons est effectué en une seule passe entraîne une diminution considérable du temps d'assemblage de la cuve.

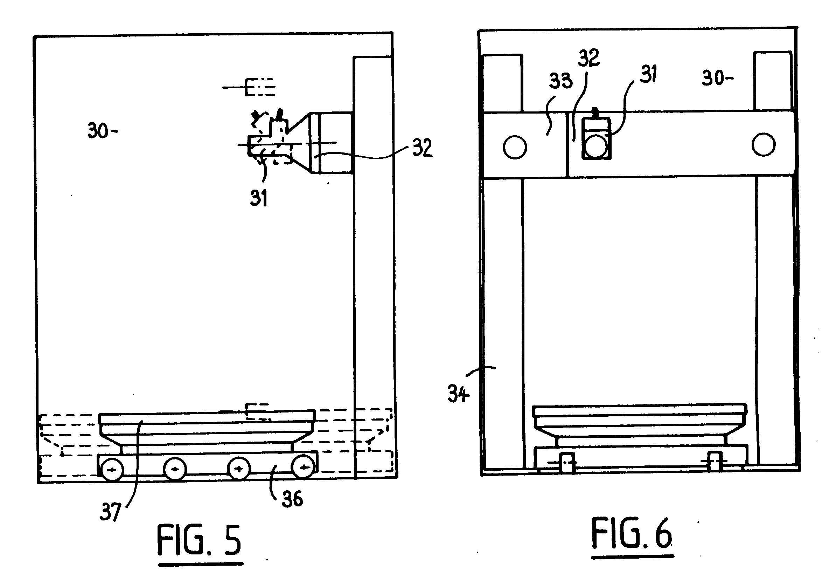

Sur les figures 5, 6 et 7, on a représenté une installation permettant de réaliser le soudage par faisceau d'électrons des pièces élémentaires constituant une cuve d'un réacteur nucléaire.

L'installation est constituée par une enceinte 30 de grandes dimensions dont l'atmosphère peut être évacuée par un système de pompage susceptible d'établir un vide poussé de l'ordre de $10^{-5}$ mm de mercure.

Pour l'assemblage des cuves de réacteur nucléaire à eau sous pression dont le diamètre est voisin de 4,50 m, on a prévu une enceinte de forme parallélépipédique dont les dimensions intérieures sont les suivantes : longueur : 8,50 m, largeur : 7,50 m et hauteur : 12,50 m. Le volume d'une telle enceinte est de 800 m³. Un canon à électrons 31 d'une puissance de 200 KW est fixé sur un chariot 32 monté mobile suivant la direction longitudinale d'une poutre 33 elle-même montée mobile dans la direction verticale sur deux colonnes verticales 34 s'étendant substantiellement sur toute la hauteur de l'enceinte 30. On obtient ainsi une latitude de déplacement du canon à électrons, de l'ordre de 6 m dans la direction transversale et de l'ordre de 9 m dans la direction verticale.

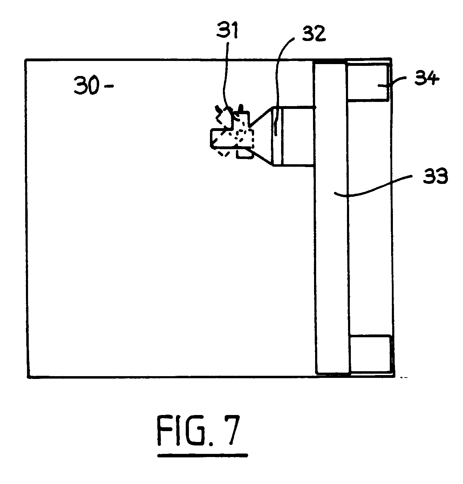

Le canon 31, comme il est visible sur les figures 5 et 7, est monté mobile en rotation sur le chariot 32, avec une amplitude de 90°, autour d'un axe horizontal et de direction transversale par rapport à l'enceinte et autour d'un axe vertical.

L'installation de soudage par faisceau d'électrons comporte également un chariot 36 sur lequel est monté un plateau tournant 37 d'un diamètre de l'ordre de 5 m. Le chariot 36 est monté mobile à l'intérieur de l'enceinte 30, de façon à pouvoir se déplacer avec une amplitude de l'ordre de 3,30 m, dans la direction longitudinale de l'enceinte 30.

Une installation telle que représentée sur les figures 5, 6 et 7 permet d'effectuer l'ensemble des soudures d'assemblage d'une cuve de réacteur nucléaire.

Pour la réalisation des soudures d'assemblage des viroles entre elles ou des viroles et des calottes sphériques, les pièces à assembler sont fixées sur le plateau 37 et le canon à électrons 31 est mis en position horizontale à la hauteur voulue pour effectuer le joint soudé. Les pièces sont mises en rotation autour de l'axe vertical du plateau tournant 37 et le joint soudé est réalisé par faisceau d'électrons en une seule passe, à une vitesse comprise entre 10 et 40 cm/mn, selon l'épaisseur du joint à souder.

On a pu effectuer des joints de soudure d'une épaisseur allant jusqu'à 300 mm et d'une excellente qualité métallurgique, sur des pièces en acier à 2,25 % de chrome et 1 % de molybdène.

Les tubulures 10 peuvent également être fixées par soudure par faisceau d'électrons sur la virole porte-tubulures 8 en utilisant l'installation des figures 5, 6 et 7. Cette opération peut être réalisée grâce au procédé décrit dans une demande de brevet déposée le même jour que la présente demande par la Société FRAMATOME. Ce procédé se caractérise en particulier par une surface de raccordement entre chacune des tubulures et la virole de forme tronconique.

L'acier utilisé pour la réalisation des composants présente comme avantage essentiel d'être peu sensible à l'irradiation. Cet acier au chrome-molybdène présente une température de début de palier ductile inférieure à -20°C à l'état non irradié. Cette température s'élève à un niveau voisin de 0 à 10°C, après quarante ans d'irradiation dans les conditions de service au voisinage du coeur d'un réacteur nucléaire. Ces conditions correspondent à la durée de vie maximale d'une cuve réacteur nucléaire. Il en résulte que les composants réalisés suivant le procédé de l'invention en acier au chrome-molybdène ne sont pas sujets à une rupture par clivage par propagation instable de fissures qui ne peut apparaître qu'en dessous du palier ductile. On évite même tout risque de propagation de fissures pouvant entraîner une fuite dans la cuve.

En outre, la teneur en carbone de l'acier utilisé étant faible, une seule couche de revêtement inoxydable est généralement nécessaire sur la paroi interne de la cuve. Cet avantage est d'autant plus marqué que la teneur en carbone de l'acier est limitée à un niveau plus faible.

L'invention ne se limite pas aux modes de réalisation qui ont été décrits.

Les seules limitations du procédé sont relatives à l'epaisseur de paroi qui peut être soudée en une seule passe, par faisceau d'électrons.

Compte tenu de cette limitation, l'invention est applicable à la réalisation de toute cuve pour un réacteur nucléaire.

## Revendications

1. Procédé de fabrication d'une cuve d'un réacteur nucléaire à eau légère comportant une enveloppe de forte épaisseur, symétrique de révolution, consistant à mettre en forme au moins deux pièces élémentaires en acier au chrome-molybdène, de forme générale symétrique de révolution et ayant une épaisseur supérieure à 100 mm, puis à les assembler par soudage par faisceau d'électrons suivant toute leur épaisseur pour réaliser le composant, caractérisé par le fait que les pièces élémentaires (2a, 2b, 6, 7, 8, 9,10,3a, 3b) sont réalisées en un acier ayant la composition suivante :
C : 0,11 à 0,15 % ; Mn 0,30 à 0,60 % ; Si : 0,15 à 0,35 %; Cr : 2 à 2,5 % ; Mo : 0,9 à 1,1 % ; Ni : max 0,30 % ; P : max 0,005 % ; S : max 0,005 % ; Cu : max 0,05 % ; V : max 0,01 % ; Al : max 0,02 % ; Co : max 0,03 % ; Sb : max 0,001 % ; As : max 0,012 % et que l'assemblage des pièces élémentaires est réalisé en un seul passage, sans métal d'apport, suivant toute l'épaisseur des pièces élémentaires.

2. Procédé de fabrication suivant la revendication 1, caractérisé par le fait que les pièces élémentaires (2b, 6, 7, 8) ont une épaisseur de paroi comprise entre 200 et 300 mm.

3. Procédé de fabrication suivant la revendication 1, dans le cas où la cuve comporte un fond hémisphérique (2), une virole de coeur (13) et une virole porte-tubulure (8), caractérisé par le fait que le fond hémisphérique (2) est relié à la virole de coeur (13) par soudage par faisceau d'électrons et que le sous-ensemble réalisé ou sous-ensemble inférieur de la cuve (18) est relié, à un sous-ensemble supérieur (19) constitué par la virole porte-tubulure (14) solidaire d'une bride de support (9) d'un couvercle de cuve (3), également par soudage par faisceau d'électrons.

4. Cuve d'un réacteur nucléaire à eau sous pression comportant un corps cylindrique fermé par des fonds bombés de forme hémisphérique, caractérisée par le fait qu'elle est obtenue par un procédé de fabrication selon l'une quelconque des revendications 1 à 3.

## Patentansprüche

1. Verfahren zur Herstellung eines Leichtwasserreaktorbehälters mit einer rotationssymmetrischen Hülle großer Dicke, bei dem mindestens zwei Grundelemente aus Chrommolybdänstahl geformt werden, die eine allgemein rotationssymmetrische Form und eine Dicke größer als 100 mm haben, die anschließend durch Verschweißen mit einem Elektronenstrahl über ihre gesamte Dicke zusammengesetzt werden, um den bestandteil herzustellen, **dadurch gekennzeichnet**, daß die Grundelemente (2a, 2b, 6, 7, 8, 9, 10, 3a, 3b) aus einem .Stahl hergestellt sind mit der folgenden Zusammensetzung:
C : 0,11 bis 0,15 % ; .Mn 0,30 bis 0,60 % ; .Si : 0,15 bis 0,35 %; Cr : 2 bis 2,5 % ; Mo : 0,9 bis 1,1 % ; Ni : max 0,30 % ; P : max 0,005 % ; s : max 0,005 % ; Cu : max 0,05 % ; V : max 0,01 % ; Al : max 0,02 % ; Co : max 0,03 % ; Sb : max 0,001 % ; As : max 0,012 % und dadurch daß das Zusammenfügen der Grundelemente während eines einzigen Durchgangs ohne Aufschweißmetall über die gesamte Dicke der Grundelemente erfolgt.

2. Herstellungsverfahren nach Anspruch 1, dadurch gekennzeichnet, daß die Grundelemente (2b, 6, 7, 8) eine Wandstärke zwischen 200 und 300 mm haben.

3. Herstellungsverfahren nach Anspruch 1, bei dem der Behälter einen halbkugelförmigen Boden (2), einen Kernring (13) und einen Rohrträgerring (8) aufweist, dadurch gekennzeichnet, daß der halbkugelförmige Boden (2) mit dem Kernring (13) durch Elektronenstrahlschweißen verbunden ist und daß die fertiggestellte Untergruppe bzw. die untere Untergruppe des Behälters (18) mit einer oberen Untergruppe (19) ebenfalls mittels Elektronenstrahlverschweißen verbunden wird, wobei die obere Untergruppe aus dem Rohrträgerring (14) besteht, der mit einem Trägerflansch (9) eines Deckels des Gefäßes (3) verbunden ist.

4. Behälter eines Druckwasserreaktors mit einem zylinderförmigen Körper, der durch halbkugelförmige Böden geschlossen ist, dadurch gekennzeichnet, daß er durch ein Herstellungsverfahren nach einem der Ansprüche 1 bis 3 erhalten wird.

## Claims

1. Process for the manufacture of a light-water nuclear reactor vessel comprising a rotationally symmetrical, extremely thick shell, consisting in shaping at least two component parts of rotationally symmetrical overall shape made of chromium-molybdenum steel more than 100 mm thick, then assembling them by electron beam welding over their entire thickness to produce the component, characterized in that the component parts (2a, 2b, 6, 7, 8, 9, 10, 3a, 3b) are made of a steel having the following composition:
C: 0.11 to 0.15%, Mn 0.30 to 0.60%, Si: 0.15 to 0.35%, Cr: 2 to 2.5%, Mo: 0.9 to 1.1%, Ni: max. 0.30%, P: max. 0.005%, S: max. 0.005%, Cu: max. 0.05%, V: max. 0.01%, Al: max. 0.02%, Co: max. 0.03%, Sb: max. 0.001%, As: max. 0.012%, and in that the component parts are assembled in a single pass, without filler metal, over the entire thickness of the component parts.

2. Manufacturing process according to claim 1, characterized in that the component parts (2b, 6, 7, 8) have a wall thickness of between 200 and 300 mm.

3. Manufacturing process according to claim 1, where the vessel comprises a hemispherical bottom (2), a core shell (13) and a tube-carrying shell (8), characterized in that the hemispherical bottom (2) is connected to the core shell (13) by electron beam welding and the subassembly produced or lower subassembly of the vessel (18) is connected to an upper subassembly (19) consisting of the tube-carrying shell (14) securely fixed to a support flange (9) for a vessel cover (3), again by electron beam welding.

4. Pressurized-water nuclear reactor vessel comprising a cylindrical body closed off by dished bases of hemispherical shape, characterized in that it is obtained by a manufacturing process according to any of claims 1 to 3.

FIG. 1

FIG.2

FIG.3

EP 0 312 426 B1

FIG.4.

FIG.6

FIG. 5

30 - 31 32 34 33

FIG. 7